# EUROPÄISCHE PATENTSCHRIFT

(11) **EP 2 808 655 B1**
(45) Veröffentlichungstag und Bekanntmachung des Hinweises auf die Patenterteilung: **09.09.2020**
(21) Anmeldenummer: 14169562.7
(22) Anmeldetag: 23.05.2014
(51) Int. Cl.: G01D 11/24, G01D 11/30, B25B 15/00, G01B 21/00

(54) **Kalibrierungsvorrichtung**
Calibration device
Dispositif de calibrage

(30) Priorität: 29.05.2013 DE 102013009166
(43) Veröffentlichungstag der Anmeldung: 03.12.2014
(73) Patentinhaber: inelta Sensorsysteme GmbH & Co., 85521 Ottobrunn (DE)
(72) Erfinder: Michael FIALA, 82211 Breitbrunn (DE); Dr.-Ing. Jochen HEIMANN, 85579 Neubiberg (DE)
(74) Vertreter: Hoefer & Partner Patentanwälte mbB

(56) Entgegenhaltungen:
- DE-U1-202009 017 089
- US-A- 5 823 950
- US-A1- 2012 191 378

## Beschreibung

Die Erfindung betrifft eine Kalibrierungsvorrichtung gemäß dem Oberbegriff des Anspruches 1.

Derartige, aus der DE 20 2009 017 089 U1 bekannte Kalibrierungsvorrichtungen werden z.B. zur Positionsbestimmung von Roboterarmen verwendet. Hierfür wird ein Kalibriersensor an Messpunkten des Roboters befestigt, wozu der Kalibriersensor ein Gewinde aufweist, das auf ein Gegengewinde am Roboter aufgeschraubt werden kann. Aufgrund der sich dadurch ergebenden Drehung des Kalibriersensors beim Aufschrauben kann ein Anschlusskabel erst nach der Anbringung des Kalibriersensors am Roboter mit seinem Stecker in eine Anschlussbuchse des Kalibriersensors eingesteckt werden. Da bei diesem Einstecken die Anschlussbuchse häufig für die Bedienperson nicht sichtbar ist, ist die Fixierung des Anschlusskabels am Kalibriersensor häufig mit Schwierigkeiten verbunden und damit langwierig.

Aus der US 5 823 950 A ist ein medizinischer Messkopf bekannt, der einen flexiblen Wickelbereich mit einem zugeordneten Verbindungsteil aufweist, das mit einem Anschlusskabel verbunden ist. Das Verbindungsteil umfasst hierbei einen Emitterbereich, der beispielsweise LEDs enthalten kann, und der wiederverwendbar ist. Dieser Emitterbereich kann mit einem Verbinungsbereich des Verbindungsteils verbunden werden und dann in eine Anschlussbuchse eingesteckt werden, die mit elektrischen Verbindern versehen ist, die mit entsprechenden elektrischen Verbindern des Verbindungsbereichs zusammenwirken können.

Es ist daher Aufgabe der vorliegenden Erfindung, eine Kalibrierungsvorrichtung der im Oberbegriff des Anspruches 1 angegebenen Art zu schaffen, die einfach aufgebaut und leicht zu montieren ist.

Die Lösung dieser Aufgabe erfolgt durch die Merkmale des Anspruches 1.

Die Unteransprüche haben vorteilhafte Weiterbildungen der Erfindung zum Inhalt.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine teilweise aufgebrochene, schematisch leicht vereinfachte Darstellung einer erfindungsgemäßen Kalibrierungsvorrichtung, und
- Fig. 2: eine perspektivische Ansicht eine Positionierhilfseinrichtung der erfindungsgemäßen Kalibrierungsvorrichtung.

Die Erfindung betrifft eine Kalibrierungsvorrichtung gemäß dem Oberbegriff des Anspruches 1.

Derartige Kalibrierungsvorrichtungen werden z.B. zur Positionsbestimmung von Roboterarmen verwendet. Hierfür wird ein Kalibriersensor an Messpunkten des Roboters befestigt, wozu der Kalibriersensor ein Gewinde aufweist, das auf ein Gegengewinde am Roboter aufgeschraubt werden kann. Aufgrund der sich dadurch ergebenden Drehung des Kalibriersensors beim Aufschrauben kann ein Anschlusskabel erst nach der Anbringung des Kalibriersensors am Roboter mit seinem Stecker in eine Anschlussbuchse des Kalibriersensors eingesteckt werden. Da bei diesem Einstecken die Anschlussbuchse häufig für die Bedienperson nicht sichtbar ist, ist die Fixierung des Anschlusskabels am Kalibriersensor häufig mit Schwierigkeiten verbunden und damit langwierig.

Es ist daher Aufgabe der vorliegenden Erfindung, eine Kalibrierungsvorrichtung der im Oberbegriff des Anspruches 1 angegebenen Art zu schaffen, die einfach aufgebaut und leicht zu montieren ist.

Die Lösung dieser Aufgabe erfolgt durch die Merkmale des Anspruches 1.

Die Unteransprüche haben vorteilhafte Weiterbildungen der Erfindung zum Inhalt.

Weitere Einzelheiten, Vorteile und Merkmale der vorliegenden Erfindung ergeben sich aus nachfolgender Beschreibung von Ausführungsbeispielen anhand der Zeichnung. Es zeigt:

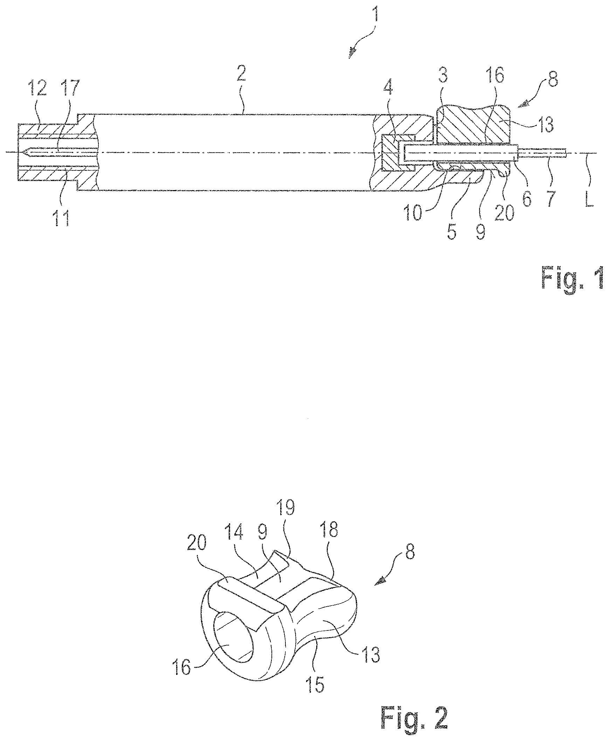

- Fig. 1: eine teilweise aufgebrochene, schematisch leicht vereinfachte Darstellung einer erfindungsgemäßen Kalibrierungsvorrichtung, und
- Fig. 2: eine perspektivische Ansicht eine Positionierhilfseinrichtung der erfindungsgemäßen Kalibrierungsvorrichtung.

In Fig. 1 ist eine erfindungsgemäße Kalibrierungsvorrichtung 1 dargestellt, die einen Kalibriersensor 2 mit einer Längsachse L aufweist.

Der Kalibriersensor 2 ist auf einer Seite mit einer Anschlussbuchse 4 versehen, wobei die Anschlussbuchse 4 von einer Stirnfläche 3 des Kalibriersensors 2 aus gesehen innerhalb des Kalibriersensors 2 angeordnet ist.

Von der Stirnfläche 3 steht in Richtung der Längsachse L eine Schraubendreherklinge 5 vor, mit der im Zuge der Montage der Kalibrierungsvorrichtung 1 Schutzkappen demontiert werden können.

Die Kalibrierungsvorrichtung 1 weist ferner einen Stecker 6 auf, der mit einem Anschlusskabel 7 verdrehfest verbunden ist. Der Stecker 6 wird, wie Fig. 1 verdeutlicht, in die Anschlussbuchse 4 eingesteckt.

Um ein korrektes Einstecken des Steckers 6 in die Anschlussbuchse 4 zu erleichtern, ist der Stecker 6 mit einer Positionierhilfseinrichtung 8 versehen. Die Positionierhilfseinrichtung 8 weist hierfür eine Anlagefläche 9 auf, die mit einer komplementär ausgebildeten Gegenfläche 10 der Schraubendreherklinge 3 zusammenwirkt. Diese Ausbildung macht ein einfaches und schnelles Einstecken des Steckers 6 selbst dann möglich, wenn die Kalibrierungsvorrichtung 1, wie dies in ungünstigen Montagefällen möglich ist, von der Bedienperson nur ertastet werden kann, da das Auflegen der Anlagefläche 9 auf die Gegenfläche 10 der Schraubendreherklinge 5 selbst dann einfach durchzuführen ist, wenn die Bedienperson die Anschlussbuchse 4 nicht sehen kann.

Wie Fig. 1 ferner zeigt, weist der Kalibriersensor 2 an seinem der Stirnfläche 3 gegenüberliegenden Ende einen Anschlusszapfen 12 auf, der mit einem Innengewinde 11 versehen ist, das auf ein Gegengewinde eines Roboters aufgeschraubt werden kann, an dem die Kalibrierungsvorrichtung 1 zur Positionsbestimmung der Roboterarme angebracht werden kann.

Wie sich aus einer Zusammenschau der Fig. 1 und 2 ergibt, weist die Positionierhilfseinrichtung 8 ein Gehäuse 13 auf, das im Beispielsfalle mit zwei Griffmulden 14 und 15 als Abziehhilfe versehen ist.

Ferner ist im Gehäuse 13 eine Durchgangsbohrung 16 vorgesehen, mit der die Positionierhilfseinrichtung 8 auf den Stecker 6 aufgesteckt werden kann. Wie insbesondere Fig. 2 verdeutlicht, schließen sich an die Anlagefläche 9 zwei seitliche Schrägflächen 18 und 19 an, die dazu dienen, produktionsbedingte Differenzen zwischen der Schraubendreherklinge 5 und dem Stecker 6 ausgleichen zu können.

Schließlich ist die Anlagefläche 9 mit einer vorstehenden Wand 20 versehen, die die Schraubendreherklinge 5 im eingesteckten Zustand des Steckers 6 abdeckt.

Neben der vorstehenden schriftlichen Beschreibung der Erfindung wird zu deren ergänzender Offenbarung hiermit explizit auf die zeichnerische Darstellung der Erfindung in den Fig. 1 und 2 Bezug genommen.

### Bezugszeichenliste

- 1: Kalibrierungsvorrichtung
- 2: Kalibriersensor
- 3: Stirnfläche
- 4: Anschlussbuchse
- 5: Schraubendreherklinge
- 6: Stecker
- 7: Anschlusskabel
- 8: Positionierhilfseinrichtung
- 9: Anlagefläche
- 10: Gegenfläche
- 11: Innengewinde
- 12: Montagebuchse
- 13: Gehäuse
- 14, 15: Griffmulden
- 16: Durchgangsausnehmung
- 17: Fühlstift
- 18, 19: Schrägflächen
- 20: vorstehende Wand
- L: Längsachse

## Patentansprüche

1. Kalibrierungsvorrichtung (1)
- mit einem Kalibriersensor (2),
• der eine Längsachse (L) hat,
• der eine elektrische Anschlussbuchse (4) aufweist, und
• der mit einer Schraubendreherklinge (5) versehen ist, die von einer Stirnfläche (3) in Richtung der Längsachse (L) vorsteht; und
- mit einem Stecker (6) zum Einstecken in die Anschlussbuchse (4), der mit einem Anschlusskabel (7) verdrehfest verbunden ist,
**dadurch gekennzeichnet,**
- **dass** auf dem Stecker (6) eine Positionierhilfseinrichtung (8) angeordnet ist, die eine Anlagefläche (9) aufweist, die mit einer komplementär ausgebildeten Gegenfläche (10) der Schraubendreherklinge (5) zusammenwirkt.

2. Kalibrierungsvorrichtung nach Anspruch 1, **dadurch gekennzeichnet, dass** die Positionierhilfseinrichtung (8) ein Gehäuse (13) aufweist, das mit Griffmulden (14, 15) versehen ist.

3. Kalibrierungsvorrichtung nach Anspruch 2, **dadurch gekennzeichnet, dass** das Gehäuse (13) mit einer Durchgangsausnehmung (16) versehen ist.

4. Kalibrierungsvorrichtung nach einem der Ansprüche 1 bis 3, **dadurch gekennzeichnet, dass** seitlich an der Anlagefläche (9) Schrägflächen (18, 19) angeordnet sind.

5. Kalibrierungsvorrichtung nach einem der Ansprüche 1 bis 4, **dadurch gekennzeichnet, dass** an einem Ende der Anlagefläche (9) eine hochstehende Wand (20) angeordnet ist.

6. Kalibrierungsvorrichtung nach einem der Ansprüche 1 bis 5, **dadurch gekennzeichnet, dass** der Kalibrierungssensor (2) eine Einsteckbuchse (12) aufweist, in deren Innenraum ein Innengewinde (11) und ein Fühlstift (17) angeordnet sind.

## Claims

1. Calibration device (1), comprising
- a calibration sensor (2),
• which has a longitudinal axis (L),
• which has an electrical connection socket (4), and
• which is provided with a screwdriver blade (5) projecting from an end face (3) along the longitudinal axis (L); and
- a plug (6) for insertion into the connection socket (4), which is connected with a connection cable (7) in a torsion-proof manner,
**characterized, in that**
- a positioning auxiliary device (8) is arranged on the plug (6) including a contact surface (9) which cooperates with a complementary counter surface (10) of the screwdriver blade (5).

2. Calibration device according to claim 1, **characterized in that** the positioning auxiliary device (8) comprises a housing (13) provided with recessed grips (14, 15).

3. Calibration device according to claim 2, **characterized in that** the housing (13) is provided with a through-recess (16).

4. Calibration device according to one of claims 1 to 3, **characterized in that** inclined surfaces (18, 19) are arranged laterally on the contact surface (9).

5. Calibration device according to one of the claims 1 to 4, **characterized in that** an upstanding wall (20) is arranged at one end of the contact surface (9).

6. Calibration device according to one of claims 1 to 5, **characterized in that** the calibration sensor (2) has a plug-in socket (12), in the interior of which an internal thread (11) and a feeler pin (17) are arranged.

## Revendications

1. Dispositif de calibrage (1),
- avec un capteur de calibrage (2),
• qui présente un axe longitudinal (L),
• qui présente une douille de raccordement (4) électrique, et
• qui est pourvu d'une lame de tournevis (5) qui dépasse d'une surface avant (3) en direction de l'axe longitudinal (L) ; et
- avec une fiche (6) pour l'enfichage dans la douille de raccordement (4) qui est reliée sans pouvoir tourner à un câble de raccordement (7),
**caractérisé en ce**
- **qu'**un dispositif auxiliaire de positionnement (8) est agencé sur la fiche (6), lequel présente une surface d'appui (9) qui coagit avec une surface antagoniste (10) réalisée de manière complémentaire de la lame de tournevis (5).

2. Dispositif de calibrage selon la revendication 1, **caractérisé en ce que** le dispositif auxiliaire de positionnement (8) présente un boîtier (13) qui est pourvu de poignées concaves (14, 15).

3. Dispositif de calibrage selon la revendication 2, **caractérisé en ce que** le boîtier (13) est pourvu d'un évidement de passage (16).

4. Dispositif de calibrage selon l'une des revendications 1 à 3, **caractérisé en ce que** des surfaces obliques (18, 19) sont agencées latéralement au niveau de la surface d'appui (9).

5. Dispositif de calibrage selon l'une des revendications 1 à 4, **caractérisé en ce qu'**une paroi (20) verticale est agencée au niveau d'une extrémité de la surface d'appui (9).

6. Dispositif de calibrage selon l'une des revendications 1 à 5, **caractérisé en ce que** le capteur de calibrage (2) présente une douille d'enfichage (12) dans l'espace intérieur de laquelle un filet intérieur (11) et une tige de contrôle (17) sont agencés.
